# EUROPEAN PATENT APPLICATION

(11) **EP 3 689 987 A1**
(43) Date of publication of application: **05.08.2020**
(21) Application number: 18862479.5
(22) Date of filing: 26.09.2018
(51) Int. Cl.: C09D 163/00, B32B 9/00, B32B 27/30, B32B 27/38, C09D 1/00, C09D 5/32, C09D 5/33, C09D 7/62, C09D 129/14, C09D 133/00, G02B 5/26

(54) **LIQUID COMPOSITION FOR FORMING INFRARED-SHIELDING FILM, METHOD FOR PRODUCING INFRARED-SHIELDING FILM THEREFROM, AND INFRARED-SHIELDING FILM**

(30) Priority: 28.09.2017 JP 2017187490; 19.09.2018 JP 2018174355
(71) Applicant: Mitsubishi Materials Corporation, Tokyo 100-8117 (JP)
(72) Inventor: HIGANO, Satoko, Naka-shi Ibaraki 311-0102 (JP)
(74) Representative: Gille Hrabal
(86) International application number: PCT/JP2018/035817
(87) International publication number: WO 2019/065788

(57) **Abstract**

Provided is a liquid composition for forming an infrared-shielding film, the liquid composition including: aggregated particles in each of which a plurality of single core-shell particles are aggregated; a binder; and a solvent, in which cores of the core-shell particles are ITO particles having an average particle diameter of 5 nm to 25 nm, each shell of the core-shell particles is an insulating material, an average particle diameter of the aggregated particles is 50 nm to 150 nm, and the binder is one or two or more compounds selected from the group consisting of a hydrolyzate of silica sol, an acrylic resin, an epoxy resin, a polyvinyl acetal resin, and a polyvinyl butyral resin.

## Description

### TECHNICAL FIELD

The present invention relates to a liquid composition containing ITO particles for forming an infrared-shielding film having a high reflectance of near-infrared light, excellent visible light transmission properties, radio wave transmission properties, abrasion resistance, and chemical resistance, and high film hardness, and a method for producing an infrared-shielding film therefrom. The present invention also relates to an infrared-shielding film having a high reflectance of near-infrared light, excellent visible light transmission properties, radio wave transmission properties, abrasion resistance, and chemical resistance, and high film hardness. In this specification, ITO refers to indium tin oxide (Indium Tin Oxide).

Priority is claimed on Japanese Patent Application No. 2017-187490, filed on September 28, 2017 and Japanese Patent Application No. 2018-174355, filed on September 19, 2018, the content of which is incorporated herein by reference.

### BACKGROUND ART

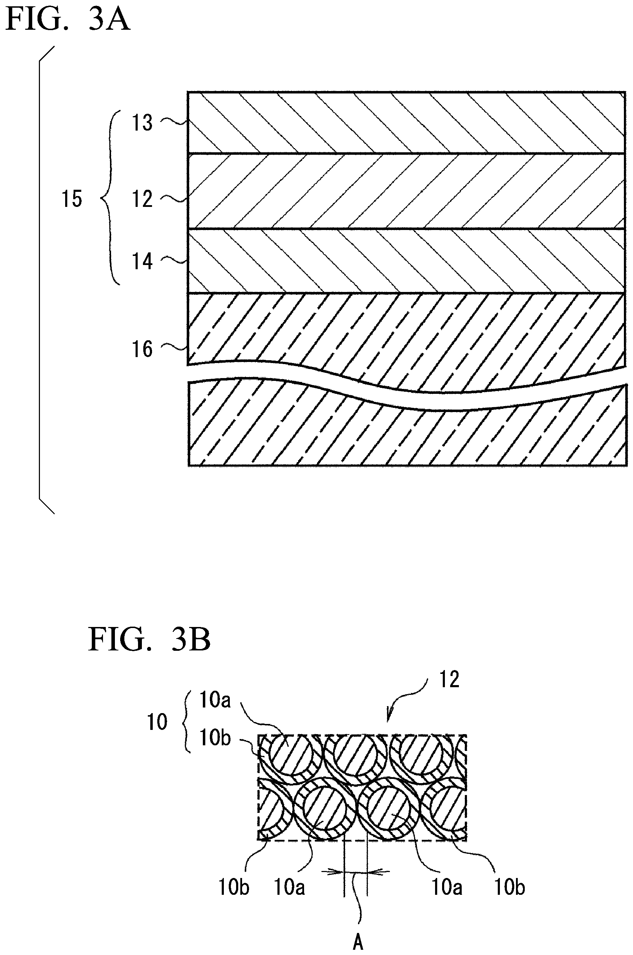

Heretofore, the present applicant has proposed, as an infrared-shielding film, infrared-shielding laminate including an ITO particle-containing layer in which core-shell particles having ITO particles as a core and an insulating material coating the core as a shell are in contact with each other, and an overcoat layer coating an upper surface of the 1TO particle-containing layer (see PTL 1 (Claim 1, Claim 3, Paragraph [0011], Paragraph [0013], Paragraph [0042])). FIG. 3A is a cross-sectional view of an infrared-shielding material in which an infrared-shielding laminate of the related art is formed on a substrate, and FIG. 3B is an enlarged cross-sectional view of an 1TO particle-containing layer of the infrared-shielding laminate shown in FIG. 3A. As shown in FIGS. 3A and 3B, in an infrared-shielding laminate 15, core-shell particles 10 and 10 are in contact with each other in the 1TO particle-containing layer 12. In other words, ITO particles 10a and 10a come into contact with each other through insulating materials 10b and 10b. Therefore, the ITO particles 10a and 10a are arranged close to each other at a distance A between particles. Thereby, contact between the ITO particles 10a and 10a, which are conductive particles, is prevented, and the ITO particle-containing layer 12 itself is no longer a conductive layer and exhibits radio wave transmission properties. In a case where light in the near-infrared region and the infrared region is incident to the ITO particle-containing layer 12 of the infrared-shielding laminate 15 through the overcoat layer 13, an electric field of surface plasmons excited by this light is enhanced by a near field effect occurring within the distance between particles, and the plasmon-resonant light is reflected. Since the ITO particle-containing layer 12 is coated and protected by the overcoat layer 13, the infrared-shielding laminate 15 has practical strength.

In the infrared-shielding laminate 15, the ITO particle-containing layer 12 is formed by applying a dispersion of the core-shell particles 10 on a base coat layer 14 and drying the dispersion. The dispersion of the core-shell particles 10 is obtained by adding the core-shell particles 10 in which the ITO particles 10a are coated with the insulating material 10b of silica, alumina, or an organic protective material to a solvent of water and alcohol and dispersing the resultant material with an ultrasonic homogenizer or the like.

### Citation List

### Patent Literature

[PTL 1] Japanese Unexamined Patent Application, First Publication No. 2016-118679

### DISCLOSURE OF INVENTION

### Technical Problem

Although it depends on a material of a shell, core-shell particles 10 disclosed in PTL 1 are comparatively hardly aggregated with ordinary nanoparticles, in a case where a shell is an organic protective agent or the like. An ITO particle-containing layer 12 disclosed in PTL 1 is formed by forcibly dispersing a plurality of the core-shell particles 10 into single particles by an ultrasonic homogenizer or the like, and aligning these core-shell particles 10, as shown in an enlarged view of FIG. 3B. By this forced dispersion operation, even in a case where the core-shell particles 10 are aggregated or not aggregated, the core-shell particles are easily dispersed into single particles. However, the 1TO particle-containing layer 12 composed of single core-shell particles 10 is a brittle layer, and therefore, it is necessary that the ITO particle-containing layer 12 is coated with an overcoat layer 13 or interposed between the overcoat layer 13 and a base coat layer 14 for reinforcement. In addition, in the infrared-shielding laminate 15, it was necessary to form literally a laminate, by repeatedly applying a liquid composition for forming an infrared-shielding film to form the ITO particle-containing layer 12 and applying a plurality of types of liquids on a substrate 16 and dry the liquids to form the base coat layer 14 or the overcoat layer 13, thus, a large number of steps was necessary for forming the infrared-shielding film, and this needed to be improved. In addition, the adhesion at an interface between layers constituting the laminate easily tends to be insufficient, and the chemical resistance is not high.

An object of the present invention is to provide a liquid composition containing ITO particles for forming an infrared-shielding film having a high reflectance of near-infrared light, excellent visible light transmission properties, radio wave transmission properties, abrasion resistance, and chemical resistance, and high film hardness. Another object of the present invention is to provide a method for producing an infrared-shielding film capable of simply forming an infrared-shielding film using the liquid composition for forming an infrared-shielding film. Still another object of the present invention is to provide an infrared-shielding film having a high reflectance of near-infrared light, excellent visible light transmission properties, radio wave transmission properties, abrasion resistance, and chemical resistance, and high film hardness.

### Solution to problem

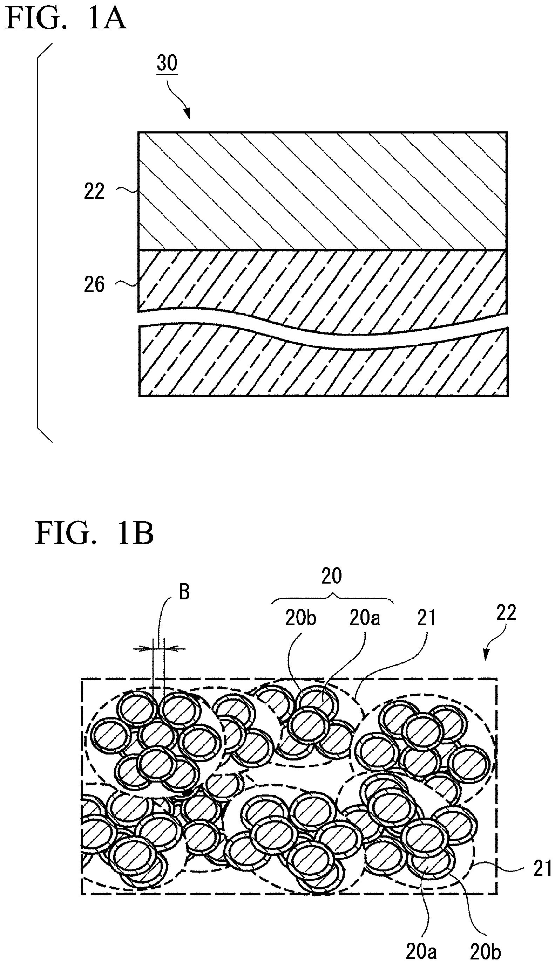

According to a first viewpoint of the present invention, as shown in FIG. 1B, there is provided a liquid composition for forming an infrared-shielding film, the liquid composition comprising: aggregated particles 21 in each of which a plurality of single core-shell particles 20 are aggregated; a binder; and a solvent, in which cores of the core-shell particles 20 are ITO particles 20a having an average particle diameter of 5 nm to 25 nm, each shell of the core-shell particles 20 is an insulating material 20b, an average particle diameter of the aggregated particles 21 is 50 nm to 150 nm, and the binder is one or two or more compounds selected from the group consisting of a hydrolyzate of silica sol, an acrylic resin, an epoxy resin, a polyvinyl acetal resin, and a polyvinyl butyral resin.

In a second viewpoint of the present invention, there is provided the liquid composition for forming an infrared-shielding film according to the first viewpoint, in which a distance B between adjacent particles of the ITO particles 20a in the plurality of core-shell particles 20 constituting the aggregated particles 21 is 0.5 nm to 10 nm.

In a third viewpoint of the present invention, there is provided the liquid composition for forming an infrared-shielding film according to the first or second viewpoint, in which the insulating material 20b is silica, alumina, or an organic protective material.

In a fourth viewpoint of the present invention, there is provided the liquid composition for forming an infrared-shielding film according to one of first to third viewpoints, in which the epoxy resin is an epoxy resin having a naphthalene skeleton in a molecular structure.

According to a fifth viewpoint of the present invention, as shown in FIG. 1A, there is provided a method for producing an infrared-shielding film including: applying the liquid composition for forming an infrared-shielding film according to any one of the first to fourth viewpoint on a transparent substrate 26, drying the liquid composition, and performing a heat treatment to form the infrared-shielding film 22.

As shown in FIG. 1A and FIG. 1B, according to a sixth viewpoint of the present invention, there is provided an infrared-shielding film 22 comprising: aggregated particles 21 in each of which a plurality of single core-shell particles 20 are aggregated; and a cured binder 19 that binds the aggregated particles 21 and 21 with each other, in which cores of the core-shell particles 20 are ITO particles 20a having an average particle diameter of 5 nm to 25 nm, each shell of the core-shell particles 20 is an insulating material 20b, an average particle diameter of the aggregated particles 21 is 50 nm to 150 nm, and the cured binder 19 is a cured product of one or two or more compounds selected from the group consisting of a hydrolyzate of silica sol, an acrylic resin, an epoxy resin, a polyvinyl acetal resin, and a polyvinyl butyral resin.

### Advantageous Effects of Invention

According to the liquid composition for forming an infrared-shielding film of the first viewpoint of the present invention, an infrared-shielding film having the following characteristics can be formed. That is, as shown in FIGS. 1A and 1B, in a case where the infrared-shielding film 22 is formed of this liquid composition, the cores of the core-shell particles 20 were the ITO particles 20a having an average particle diameter of 5 nm to 25 nm and an average particle diameter of the aggregated particles 21 is 50 nm to 150 nm. Accordingly, in a case where visible light is incident to this film 22, visible light is transmitted through the film, and in contrast, in a case where light in the near-infrared region and the infrared region is incident thereto, an electric field of surface plasmons excited by this light is enhanced by a near field effect occurring within the distance between particles, and the plasmon-resonant light in the near-infrared region and the infrared region is reflected. Since the 1TO particles 20a, which are conductive particles, are coated with the insulating material 20b, the infrared-shielding film 22 itself is no longer a conductive film and exhibits radio wave transmission properties. In addition, since a specific binder is used to form the infrared-shielding film 22, it is not necessary to form the overcoat layer or the base coat layer of PTL 1, the formation of the infrared-shielding film 22 is simplified, and it is not necessary to specially reinforce the infrared-shielding film with the overcoat layer of PTL 1, and thus, film hardness and abrasion resistance are increased. An infrared-shielding film composed of a single layer different from the laminate of PTL 1 is formed by a single application or a small number of applications of the liquid composition, accordingly, there is no interface between layers and excellent chemical resistance is obtained.

According to the liquid composition for forming an infrared-shielding film according to the second viewpoint of the present invention, in a case where the infrared-shielding film 22 is formed of this liquid composition, an average of the distance B between the ITO particles in a state where the core-shell particles 20 and 20 are in contact with each other, that is, the distance B between particle surfaces of the adjacent ITO particles 20a and 20a is 0.5 nm to 10 nm, and accordingly, an electric field of the surface plasmons of the particles described above is easily enhanced within the distance between the particles. In a case where the distance B is less than 0.5 nm, conduction may occur between the core-shell particles and radio wave transmission properties is easily lost. In a case where the distance B is 0.5 nm or more, the infrared-shielding film 22 has radio wave transmission properties, and in a case where the distance B exceeds 10 nm, the radio wave transmission properties are maintained, but a light reflection effect is easily lost.

According to the liquid composition for forming an infrared-shielding film of the third viewpoint of the present invention, the insulating material 20b is silica, alumina, or an organic protective material, and accordingly, each particle of the ITO particles 20a is coated to apply insulating properties to the ITO particles 20a, and the distance B can be formed between the ITO particles 20a and 20a.

According to the liquid composition for forming an infrared-shielding film of the fourth viewpoint of the present invention, since the epoxy resin as the binder is an epoxy resin having a naphthalene skeleton in a molecular structure, the film hardness and the abrasion resistance of the infrared-shielding film further increase.

According to the method for producing an infrared-shielding film of the fifth viewpoint of the present invention, it is not necessary to form the overcoat layer or the base coat layer of PTL 1 and it is possible to simply produce the infrared-shielding film 22 having desired properties, by a single application or a small number of applications of the liquid composition of the present invention.

According to the infrared-shielding film of the sixth viewpoint of the present invention, the cores of the core-shell particles are the ITO particles having an average particle diameter of 5 nm to 25 nm and an average particle diameter of the aggregated particles is 50 nm to 150 nm. Accordingly, in a case where visible light is incident to this film, visible light is transmitted through the film, and in contrast, in a case where light in the near-infrared region and the infrared region is incident thereto, an electric field of surface plasmons excited by this light is enhanced by a near field effect occurring within the distance between particles, and the plasmon-resonant light in the near-infrared region and the infrared region is reflected. In addition, since the ITO particles, which are conductive particles, are coated with an insulating material, the infrared-shielding film itself is no longer a conductive film and has radio wave transmission properties. Further, since the specific cured binder that binds the aggregated particles with each other is contained, the film hardness and the abrasion resistance increase and the chemical resistance is excellent, even without reinforcing the infrared-shielding film with the overcoat layer or the like.

### BRIEF DESCRIPTION OF DRAWINGS

FIG. 1A is a cross-sectional view of an infrared-shielding material in which an infrared-shielding film according to one embodiment of the present invention is formed on a substrate.
FIG. 1B is an enlarged cross-sectional view of the infrared-shielding film shown in FIG. 1A.
FIG. 2 is a cross-sectional view of an infrared-shielding material in which an infrared-shielding film according to one embodiment of the present invention is interposed between two substrates.
FIG. 3A is a cross-sectional view of an infrared-shielding material in which a conventional infrared-shielding laminate is formed on a substrate.
FIG. 3B is an enlarged cross-sectional view of an ITO particle-containing layer of the infrared-shielding laminate shown in FIG. 3A.

### BEST MODE FOR CARRYING OUT THE INVENTION

Next, embodiments of the invention will be described with reference to the drawings.

FIG. 1A is a cross-sectional view of an infrared-shielding material in which an infrared-shielding film according to one embodiment of the present invention is formed on a substrate and FIG. 1B is an enlarged cross-sectional view of the infrared-shielding film shown in FIG. 1A.

### [ITO particles]

An average particle diameter of ITO particles 20a used in the embodiment shown in the enlarged view of FIG. 1B is 5 nm to 25 nm and preferably 10 nm to 20 nm. In a case where the average particle diameter is less than 5 nm, it is difficult to form a shell using an insulating material 20b which will be described later. In addition, it is difficult to obtain particles having a uniform particle diameter. Further, a sufficient infrared reflection effect may not be obtained. In a case where the average particle diameter exceeds 25 nm, the average particle diameter of aggregated particles 21 obtained with aggregated core-shell particles 20 which will be described later exceeds 150 nm and a lump is formed. In an infrared-shielding film formed of a liquid composition containing lump-shaped aggregated particles, a scattering intensity of visible light increases and the light transmittance deteriorates. The Sn doping amount of the ITO particles 20a is preferably in a range where a molar ratio of Sn/(Sn + In) is 0.01 to 0.25 and particularly 0.04 to 0.15. The shape of the particles is not particularly limited. However, in order to obtain the plasmon resonance effect, it is preferable that the particle diameter is within the range described above, cubic or spherical particles with small anisotropy are used. The average particle diameter of the ITO particles 20a is an average value in a case where particle diameters of 100 ITO particles from a particle observation image by a TEM.

In general, in order to produce ITO particles 20a, an aqueous solution containing In and a small amount of a water-soluble salt of Sn is reacted with alkali to coprecipitate hydroxides of In and Sn, and a coprecipitated product is obtained as a raw material. The coprecipitated product is converted into an oxide by heating and baking in the atmosphere, whereby ITO particles are produced (coprecipitation method). Instead of the coprecipitated product, a mixture of hydroxides and/or oxides of In and Sn can also be used as a raw material. In this invention, ITO particles produced by such a conventional method or ITO particles commercially available as conductive nanoparticles can be used as they are.

### (Formation of core-shell particles and aggregated particles)

Next, as shown in the enlarged view of FIG. 1B, a core-shell particle 20 having the ITO particle 20a as a core and the insulating material 20b coating the core as a shell is formed. The insulating material 20b is an electrical insulating material. The ITO particles 20a as a core are coated with the insulating material 20b as a shell formed of silica, alumina, or an organic protective material. First, a dispersion of ITO particles is obtained by adding ITO particles to a solvent at a mass ratio of particles: solvent with substantially equal percentages and dispersing the particles by a bead mill. This dispersion is diluted with the same solvent as above solvent so that a solid content concentration of the 1TO becomes 0.01% by mass to 5% by mass. In a case where the insulating material is an inorganic material such as silica or alumina, water and/or alcohol is used as the solvent. The alcohol is methanol, ethanol, propanol, isopropanol, butanol, hexanol, cyclohexanol and the like, and one or two or more these can be used. In addition, a mixed solvent of water and alcohol can be used. In a case where the insulating material is an organic protective material, the ITO particles are produced by a hot soap method using a fatty acid salt of indium or tin as a raw material. Alternatively, in a case of dispersing the ITO particles produced by the above-described coprecipitation method or the like, a dispersing agent is added and dispersed, whereby the ITO particles coated with the organic protective material can be obtained. The shell used in the embodiment is not limited to one that coats the core in a layered form, and a shell in which one end of the organic protective material is bonded to the entire surface of the core as an anchor, and the other end is released from the core surface and the organic protective material radially coats the core surface is included.
(a) In a case of coating the ITO particles with silica, tetraethoxysilane, a methoxysilane oligomer, or an ethoxysilane oligomer is added to and mixed with the diluted dispersion as a silica source. The mixture is set as an acidic solution using an acid such as a nitric acid, a phosphoric acid, or a formic acid as a catalyst, this is stirred for approximately 5 minutes to 30 minutes, and an alkali such as NaOH, KOH, or NH³ is added to the mixture as a polymerization catalyst to polymerize the silica source. The neutralized mixture is washed with ultrapure water and separated into solid and liquid, and a solid content is dried. By baking the dried solid content at 100°C to 500°C for 1 minute to 60 minutes in an inert gas atmosphere, core-shell particles in which the ITO particles are coated with a silica film are formed. For example, by holding the *core-shell particles* in the environment at relative humidity of 60% to 95% and a temperature of 50°C to 90°C for 5 hours to 30 hours or longer, aggregated particles in each of which a plurality of single core-shell particles are aggregated can be obtained. An average particle diameter of the obtained aggregated particles can be adjusted by conditions such as the average particle diameter of the core-shell particles, the relative humidity, the temperature, and the time in a case of holding the core-shell particles.
(b) In a case of coating the ITO particles with alumina, a diluted sulfuric acid solution is added to the diluted dispersion while stirring to adjust the pH to 3.5 to 4.5. Next, a predetermined amount of an aqueous solution of aluminum sulfate is gradually added to the suspension and mixed sufficiently. While continuing stirring, a sodium hydroxide solution is gradually added to adjust the pH of the suspension to 5 to 7, and the aging is performed. The obtained hydrated alumina-coated ITO particles are washed, separated into solid and liquid, and then dried to obtain hydrated alumina-coated ITO particles. By heating the hydrated alumina-coated ITO particles at 600°C or higher, the shell layer is changed to alumina, and core-shell particles in which the ITO particles are coated with an alumina film are formed. By holding the core-shell particles in the environment at relative humidity of 60% to 95% and a temperature of 50°C to 90°C for 5 hours to 30 hours, for example, aggregated particles in each of which a plurality of single core-shell particles are aggregated can be obtained. An average particle diameter of the obtained aggregated particles can be adjusted by conditions such as the average particle diameter of the core-shell particles, the relative humidity, the temperature, and the time in a case of holding the core-shell particles.
(c) In a case of coating the ITO particles with an organic protective material by adding and dispersing a dispersing agent, a dispersing agent is added and dispersed, in a case of dispersing the ITO particles produced by a coprecipitation method or the like, and accordingly, ITO particles coated with the organic protective material are formed. As the dispersing agent, a dispersing agent having an acidic adsorptive group, for example, Solsperse 36000, Solsperse 41000, or Solsperse 43000 manufactured by Lubrizol Japan Ltd. is preferable. At this time, by adjusting the amount of the dispersing agent to a small amount as 2 parts by mass to 10 parts by mass with respect to 100 parts by mass of the core particles (ITO particles), the core-shell particles in which the ITO particles are coated with the organic protective material are formed. After drying the core-shell particles at 50°C to 100°C for approximately 5 minutes to 60 minutes and then dispersing the core-shell particles again in a hydrophobic solvent such as toluene, hexane, cyclohexane, xylene, or benzene, aggregated particles in each of which a plurality of single core-shell particles are aggregated can be obtained. An average particle diameter of the obtained aggregated particles can be adjusted by the average particle diameter of the core-shell particles and the type of the hydrophobic solvent.
(d) In a case of producing ITO particles coated with an organic protective material using a hot soap method, fatty acid salts of indium and tin are used as a raw material and dissolved in an organic solvent, the solvent is volatilized, a mixture of the fatty acid salts of indium and tin is thermally decomposed at 200°C to 500°C, and accordingly, ITO particles coated with the organic protective material are formed. The ITO particles coated with the organic protective material are washed with a solvent having high polarity such as ethanol, methanol, or acetone to remove unreacted fatty acid salts and the like. Then, by dispersing the ITO particles in a solvent having a low polarity such as toluene, hexane, or cyclohexane, aggregated particles in each of which a plurality of single core-shell particles are aggregated can be obtained. An average particle diameter of the obtained aggregated particles can be adjusted by the average particle diameter of the core-shell particles and the type of the solvent. By changing a carbon chain of the fatty acid, a heating temperature, and a heating time, the *particle spacing B* (a thickness of the shells of the core-shell particles) can be changed. The number of carbon atoms is preferably 4 to 30.

### [Thickness of shell formed of insulating material]

In the cases of (a) and (b), the thickness of the shell formed of the insulating material 20b that coats the ITO particles 20a is adjusted according to each blending amount of the ITO particles and the insulating material, in a case of coating the ITO particles 20a with the insulating material 20b. Specifically, the thickness of the shell is adjusted averagely to 0.25 nm to 5 nm by setting the amount of the insulating material to 0.3 parts by mass to 800 parts by mass with respect to 100 parts by mass of the ITO particles. A value obtained by doubling the thickness of the shell corresponds to the distance B between the ITO particles 20a and 20a (see the enlarged view of FIG. 1B). The thickness of the shell can be adjusted according to conditions other than the blending amount of the ITO particles and the insulating material. For example, in the case of (a) described above, the thickness of the shell can also be adjusted according to conditions such as a concentration or an additive amount of a polymerization catalyst (alkali), a reaction temperature, and a reaction time. In the case of (b) described above, the thickness of the shell can also be adjusted also according to conditions such as the pH of the suspension.

### (Aggregated particles)

An average particle diameter of the aggregated particles 21, in which the core-shell particles 20 are aggregated, which are produced in (a) to (d) described above of the embodiment is 50 nm to 150 nm and preferably 50 nm to 100 nm. In a case where the average particle diameter is less than 50 nm, there are disadvantages such that a desired aggregation state of the particles may not be obtained. In a case where the average particle diameter exceeds 150 nm, the aggregated particles 21 is in a lump state, and as described above, the light transmittance deteriorates. The average particle diameter of the aggregated particles 21 was set as a median particle diameter in a case where a volume-converted distribution in particle diameter measurement by dynamic light scattering (LB-550 manufactured by Horiba, Ltd., solid content concentration of 1 wt%) was calculated.

### [Distance B between particles]

In a case where the infrared-shielding film 22 is formed of the liquid composition of the embodiment, the aggregated particles 21 are preferably formed so that the distance B between the ITO particles in a state where the core-shell particles 20 and 20 are in contact with each other, that is, the distance B between particle surfaces of the adjacent ITO particles 20a and 20a becomes 0.5 nm to 10 nm. This distance B is more preferably 1 nm to 5 nm. In a case where the distance B is within this range and light in the near-infrared region and the infrared regions is incident, the electric field of the surface plasmon excited by this light is enhanced by the near field effect occurring within the distance between the particles and the plasmon-resonant light in the near-infrared region and the infrared region is reflected. As a result, the plasmon-resonant light is further reflected. In a case where the distance B is less than 0.5 nm, the adjacent ITO particles and the ITO particles may not be physically separated from each other, the near field effect may not easily occur, thereby easily losing radio wave transmission properties. Also, in a case where the distance B exceeds 10 nm, the electric field of the surface plasmon due to the near field effect is not enhanced and light may be hardly sufficiently reflected.

### (Liquid composition for forming infrared-shielding film forming)

The liquid composition for forming an infrared-shielding film of the embodiment is prepared by mixing the above-described aggregated particles, a binder, and a solvent. The binder is one or two or more compounds selected from the group consisting of a hydrolyzate of silica sol, an acrylic resin, an epoxy resin, a polyvinyl acetal resin, and a polyvinyl butyral resin. The epoxy resin is preferably an epoxy resin having an aromatic ring in a molecular structure. Examples of the epoxy resin having an aromatic ring include an epoxy resin having a bisphenol skeleton, an epoxy resin having a biphenyl skeleton, and an epoxy resin having a naphthalene skeleton. Among them, the epoxy resin is preferably an epoxy resin having a naphthalene skeleton in a molecular structure. The solvent is preferably one in which the above resin is soluble, and examples thereof include water, alcohol, glycol ether, and mineral spirits.

### (Hydrolyzate of silica sol)

The hydrolyzate of silica sol in the binder used in the embodiment is a hydrolyzed condensate of a silicon alkoxide and is generated by hydrolysis (condensation) of a silicon alkoxide represented by Formula (1).

R¹ₓSi(OR²)₄₋ₓ (1)

Here, in Formula (1), R¹ represents a monovalent hydrocarbon group having 1 to 18 carbon atoms, R² represents an alkyl group having 1 to 5 carbon atoms, and x represents 0 or 1.

The hydrolyzate of this silica sol has high reactivity and maintains high film hardness obtained by applying the liquid composition containing the binder. For example, in a case of a hydrolyzed condensate of a silicon alkoxide having an alkyl group having 6 or more carbon atoms as R², the hydrolysis reaction is slow, and thus it takes time for production. In addition, there is a concern that the film hardness obtained by applying the liquid composition containing the obtained binder may decrease.

The monovalent hydrocarbon group represented by R¹ may be a saturated hydrocarbon group or an unsaturated hydrocarbon group. Examples of the saturated hydrocarbon group include an alkyl group (for example, a methyl group, an ethyl group, a 1-propyl group, and a 2-propyl group) and a cycloalkyl group (for example, a cyclopentyl group, a cyclohexyl group, and a cycloheptyl group). Examples of the unsaturated hydrocarbon group include an alkynyl group (for example, a vinyl group, a 1-propenyl group, and a 2-propenyl group), an aryl group (for example, a phenyl group, a tolyl group, a xylyl group, a biphenyl group, and a naphthyl group), an aralkyl group (for example, a benzyl group, a phenylethyl group, a phenylpropyl group, and a methylbenzyl group).

Specific examples of the silicon alkoxide represented by Formula (1) include tetramethoxysilane, tetraethoxysilane, methyltrimethoxysilane, ethyltrimethoxysilane, methyltriethoxysilane, ethyltriethoxysilane, vinyltrimethoxysilane, vinyltriethoxysilane, phenyltrimethoxysilane, and phenyltriethoxysilane. Among these, tetramethoxysilane is preferable since a film having high hardness can be obtained. In obtaining a hydrolyzed condensate, a single type of the silicon alkoxide may be used, or two types thereof may be mixed at a predetermined ratio such that the product obtained by hydrolysis (condensation) of the silicon alkoxides is contained.

In forming a hydrolyzed condensate by mixing two types of silicon alkoxides, for example, a mixing ratio between a silicon alkoxide (for example, tetramethoxysilane: TMOS) and another silicon alkoxide (for example, methyltrimethoxysilane: MTMS) is set to 1:0.5 in terms of mass ratio TMOS:MTMS.

In forming a hydrolyzed condensate of a single type of silicon alkoxide, the single type of silicon alkoxide is hydrolyzed (condensed) in an organic solvent. Specifically, 0.5 parts by mass to 2.0 parts by mass of water, 0.005 parts by mass to 0.5 parts by mass of an inorganic acid or organic acid, and 1.0 parts by mass to 5.0 parts by mass of an organic solvent are preferably mixed with 1 part by mass of a single type of silicon alkoxide to cause a hydrolysis reaction of the single type of silicon alkoxide, whereby a hydrolyzed condensate of the silicon alkoxide can be obtained. In forming a hydrolyzed condensate by mixing two types of silicon alkoxides, the silicon alkoxides are hydrolyzed (condensed) in an organic solvent. Specifically, 0.5 parts by mass to 2.0 parts by mass of water, 0.005 parts by mass to 0.5 parts by mass of an inorganic acid or organic acid and 1.0 parts by mass to 5.0 parts by mass of an organic solvent are preferably mixed with 1 part by mass of a total of the two types of silicon alkoxides to cause a hydrolysis reaction of the two types of silicon alkoxides, whereby a hydrolyzed condensate of the silicon alkoxides can be obtained. Here, the reason why it is preferable that the ratio of the water is in the range of 0.5 parts by mass to 2.0 parts by mass is that in a case where the ratio of the water is less than the lower limit value, the hydrolysis and condensation reaction of the silicon alkoxides is not sufficiently caused, and thus sufficient film hardness is not obtained. In a case where the ratio of the water is greater than the upper limit value, a problem may occur in which the reaction liquid gelates during the hydrolysis reaction. In addition, the adhesion to a substrate may be reduced. The ratio of the water is particularly preferably 0.8 parts by mass to 3.0 parts by mass. It is desirable to use ion exchange water, pure water, or the like as water to prevent the mixing of impurities.

Examples of the inorganic acid or organic acid include inorganic acids such as a hydrochloric acid, a nitric acid, and a phosphoric acid, and organic acids such as a formic acid, an oxalic acid, and an acetic acid. Among these, a formic acid is particularly preferably used. The reason for this is that the inorganic acid or organic acid functions as an acidic catalyst for promoting the hydrolysis reaction, and a film having more excellent transparency is easily formed using a formic acid as a catalyst. The formic acid is more effective in preventing the promotion of nonuniform gelation in the film after the film formation than in a case where another inorganic acid or organic acid is used. In addition, the reason why it is preferable that the ratio of the inorganic acid or organic acid is in the above range is that in a case where the ratio of the inorganic acid or organic acid is less than the lower limit value, the film hardness does not sufficiently increase due to poor reactivity. In a case where the ratio of the inorganic acid or organic acid is greater than the upper limit value, a problem may occur in which the substrate corrodes due to the residual acid although there is no influence on the reactivity. The ratio of the inorganic acid or organic acid is particularly preferably 0.008 parts by mass to 0.2 parts by mass.

An alcohol, a ketone, a glycol ether, or a glycol ether acetate is preferably used as the organic solvent. The reason why it is preferable to use the alcohol, the ketone, the glycol ether, or the glycol ether acetate as the organic solvent is that the coatability of a liquid composition for forming an infrared-shielding film to be finally obtained is improved. In addition, for example, in using a hydrolyzed condensate of two or more types of silicon alkoxides, the silicon alkoxides are easily mixed. Mixing with the epoxy resin having a naphthalene skeleton in a molecular structure is also easily performed.

Examples of the alcohol include methanol, ethanol, propanol, and isopropyl alcohol (IPA). Examples of the ketone include acetone, methyl ethyl ketone (MEK), and methyl isobutyl ketone (MIBK). Examples of the glycol ether include ethylene glycol monomethyl ether, diethylene glycol monomethyl ether, propylene glycol monomethyl ether, dipropylene glycol monomethyl ether, ethylene glycol monoethyl ether, diethylene glycol monoethyl ether, propylene glycol monoethyl ether, and dipropylene glycol monoethyl ether. Examples of the glycol ether acetate include ethylene glycol monomethyl ether acetate, diethylene glycol monomethyl ether acetate, propylene glycol monomethyl ether acetate, dipropylene glycol monomethyl ether acetate, ethylene glycol monoethyl ether acetate, diethylene glycol monoethyl ether acetate, propylene glycol monoethyl ether acetate, and dipropylene glycol monoethyl ether acetate. Among these, ethanol, IPA, MEK, MIBK, ethylene glycol monomethyl ether, ethylene glycol monomethyl ether acetate, propylene glycol monomethyl ether, or propylene glycol monomethyl ether acetate is particularly preferable since the hydrolysis reaction can be easily controlled and good coatability can be obtained in film formation.

In a case where the ratio of the organic solvent is equal to or less than the lower limit value, a problem easily occurs in which the binder formed using a hydrolyzate of a silicon alkoxide gelates, and it is difficult to obtain a transparent and uniform film. The adhesion to a substrate may also be reduced. In a case where the ratio of the organic solvent is greater than the upper limit value, it leads to a reduction in reactivity of the hydrolysis and the like, and thus a problem occurs in film curability. Accordingly, a film having excellent hardness and abrasion resistance cannot be obtained. The ratio of the organic solvent is particularly preferably 1.5 parts by mass to 3.5 parts by mass.

### [Epoxy Resin Having Naphthalene Skeleton in Molecular Structure]

The epoxy resin having a naphthalene skeleton in a molecular structure in the binder used in the embodiment is an epoxy resin having a skeleton containing at least one naphthalene ring in one molecule, and examples thereof include a naphthol type and a naphthalene diol type. Examples of the naphthalene type epoxy resin include 1,3-diglycidyl ether naphthalene, 1,4-diglycidyl ether naphthalene, 1,5-diglycidyl ether naphthalene, 1,6-diglycidyl ether naphthalene, 2,6-diglycidyl ether naphthalene, 2,7-diglycidyl ether naphthalene, 1,3-diglycidyl ester naphthalene, 1,4-diglycidyl ester naphthalene, 1,5-diglycidyl ester naphthalene, 1,6-diglycidyl ester naphthalene, 2,6-diglycidyl ester naphthalene, 2,7-diglycidyl ester naphthalene, 1,3-tetraglycidyl amine naphthalene, 1,4-tetraglycidyl amine naphthalene, 1,5-tetraglycidyl amine naphthalene, 1,6-tetraglycidyl amine naphthalene, 1,8-tetraglycidyl amine naphthalene, 2,6-tetraglycidyl amine naphthalene, and 2,7-tetraglycidyl amine naphthalene. As the epoxy resin having a naphthalene skeleton in a molecular structure, the above-described naphthalene type epoxy resin may be contained, and the naphthalene type epoxy resins may be used alone or in combination of two or more thereof. Particularly, a liquid bifunctional naphthalene type epoxy resin is preferable from the viewpoint of low viscosity. The liquid epoxy resin may be used in combination with a solid epoxy resin. Using the epoxy resin having a naphthalene skeleton in a molecular structure, a liquid composition for forming an infrared-shielding film having high film hardness and abrasion resistance and excellent heat resistance can be obtained.

### [Binder Preparation Method]

As the binder used in the embodiment, a hydrolyzate of silica sol, an acrylic resin, an epoxy resin, a polyvinyl acetal resin, and a polyvinyl butyral resin may be used alone or in combination thereof.

As an example, a method for preparing a binder by uniformly mixing the epoxy resin having a naphthalene skeleton in a molecular structure, the hydrolyzed condensate of a silicon alkoxide, and a solvent will be described. In this case, regarding the mixing ratio of the epoxy resin and the hydrolyzed condensate of a silicon alkoxide, the content of the epoxy resin having a naphthalene skeleton in a molecular structure is determined to include 40 parts by mass to 90 parts by mass and preferably 40 parts by mass to 70 parts by mass, and the content of the hydrolyzed condensate of a silicon alkoxide is determined to include 10 parts by mass to 60 parts by mass and preferably 30 parts by mass to 60 parts by mass, in 100 parts by mass of the solid content of the binder. In a case where the content of the epoxy resin is less than 40 parts by mass and the content of the hydrolyzed condensate is greater than 60 parts by mass, the infrared-shielding film formed using this binder easily cracks due to stress during baking and curing of the film, and thus the film hardness may be low and visible light transmittance may decrease. In a case where the content of the epoxy resin is greater than 90 parts by mass and the content of the hydrolyzed condensate is less than 10 parts by mass, the infrared-shielding film formed using this binder has poor rapid curability during baking, and the film hardness is not sufficiently increased. Accordingly, the film hardness may be low and abrasion resistance may deteriorate.

The solvent contained in the binder is preferably the same as the organic solvent from the viewpoint of compatibility with the hydrolyzed condensate of a silicon alkoxide. The content of the solvent is determined so as to obtain a suitable viscosity for coating in consideration of the content of the solvent for dispersing the above-described aggregated particles and the content of the organic solvent in a case where a liquid composition for forming an infrared-shielding film to be finally obtained is applied to the surface of a glass substrate or a resin film.

### [Method for Preparing Liquid Composition for Forming Infrared-shielding Film]

The liquid composition for forming an infrared-shielding film of the embodiment is prepared by mixing a dispersion in which the aggregated particles are dispersed in a solvent and the binder. In the blending ratio of the aggregated particles, the binder, and the solvent, it is preferable that the amount of the aggregated particles is 4 parts by mass to 40 parts by mass, the content of the binder is 1 part by mass to 95 parts by mass, and the balance solvent, with respect to 100 parts by mass of the liquid composition, because the viscosity of the liquid composition does not increase during the film formation which allows easy handleability. Here, the mass of the solid content derived from the epoxy resin having a naphthalene skeleton in a molecular structure is represented by X, the mass of the solid content derived from the hydrolyzate of silica sol is represented by Y, the mass of the aggregated particles is represented by Z, and the mass of the solid content of the binder is represented by (X+Y). In this case, the aggregated particles are mixed such that a mass ratio of the aggregated particles (Z) to the solid content of the binder (X+Y) (aggregated particles/solid content of binder = Z/(X + Y)) is 5/95 to 80/20, and preferably 20/80 to 60/40 in consideration of spectral characteristics of an infrared-shielding film to be obtained, film hardness, and abrasion resistance of the film. In a case where the mass ratio is less than 5/95, the ratio of the aggregated particles is too small, and thus the near-infrared ray cut rate is low and the film hardness may not increase. In a case where the mass ratio is greater than 80/20, the ratio of the aggregated particles is too large, and thus the near-infrared ray cut rate is high. However, since the amount of the binder is too small, the abrasion resistance may become low.

### [Method for Forming Infrared-shielding Film]

As shown in FIG. 1A, the liquid composition for forming an infrared-shielding film prepared as described above is applied to the surface of the transparent substrate 26, dried, and then heat-treated to form the infrared-shielding film 22. By the heat treatment, the binder of the liquid composition for forming an infrared-shielding film is cured to form a cured binder and bind the aggregated particles with each other. Accordingly, an infrared-shielding material 30 can be formed. Examples of the substrate 26 include a transparent glass substrate, a transparent resin substrate, and a transparent resin film. Examples of the glass of the glass substrate include glass having high visible light transmittance such as clear glass, high transmission glass, soda-lime glass, and green glass. Examples of the resin of the resin substrate or the resin film include acrylic resins such as polymethyl methacrylate, aromatic polycarbonate resins such as polyphenylene carbonate, and aromatic polyester resins such as polyethylene terephthalate (PET).

The liquid composition for forming an infrared-shielding film is applied to the surface of the substrate 26, dried at a predetermined temperature, and then heat-treated to form, on the surface of the substrate 26, an infrared-shielding film having a film thickness of 0.1 µm to 5.0 µm, preferably 0.5 µm to 2.5 µm. For the coating, a general coating method such as a slot die coater, a spin coater, an applicator, and a bar coater can be used. In a case where the substrate 26 is a transparent glass substrate, the substrate is heat-treated by being held at a temperature of 50°C to 300°C for 5 to 60 minutes under an oxidizing atmosphere. The temperature and the holding time are determined according to the film hardness to be required. Thus, as shown in FIG. 1A, the infrared-shielding material 30 formed of an infrared-shielding film-equipped glass substrate in which the infrared-shielding film 22 is formed on a surface of the substrate 26 of the transparent glass substrate is formed. In a case where the substrate 26 is a transparent resin film, the substrate is heat-treated by being held at a temperature of 40°C to 120°C for 5 minutes to 120 minutes under an oxidizing atmosphere. The temperature and the holding time are determined according to the film hardness to be required and the heat resistance of the base film. Thus, although not shown in the drawings, an infrared-shielding material formed of an infrared-shielding film-equipped resin film in which an infrared-shielding film is formed on a surface of a transparent resin film is formed. In a case where the film thickness of the infrared-shielding film 22 is less than 0.1 µm, the amount of the ITO particles is small, and the infrared ray cutting performance may not be sufficiently exhibited. In a case where the thickness of the infrared-shielding film is greater than 5.0 µm, stress is concentrated inside the film, and cracks may occur.

According to the liquid composition for forming an infrared-shielding film according to the embodiment having the above-described configuration, an infrared-shielding film having the following characteristics can be formed. That is, as shown in FIGS. 1A and 1B, in a case where the infrared-shielding film 22 is formed of this liquid composition, the cores of the core-shell particles 20 were the 1TO particles 20a having an average particle diameter of 5 nm to 25 nm and an average particle diameter of the aggregated particles 21 is 50 nm to 150 nm. Accordingly, in a case where visible light is incident to this film 22, visible light is transmitted through the film, and in contrast, in a case where light in the near-infrared region and the infrared region is incident thereto, an electric field of surface plasmons excited by this light is enhanced by a near field effect occurring within the distance between particles, and the plasmon-resonant light in the near-infrared region and the infrared region is reflected. Since the ITO particles 20a, which are conductive particles, are coated with the insulating material 20b, the infrared-shielding film 22 itself is no longer a conductive film and exhibits radio wave transmission properties. In addition, since a specific binder is used to form the infrared-shielding film 22, it is not necessary to form the overcoat layer or the base coat layer, the formation of the infrared-shielding film 22 is simplified, and it is not necessary to specially reinforce the infrared-shielding film with the overcoat layer, and thus, film hardness and abrasion resistance are increased. An infrared-shielding film composed of a single layer different from the laminate is formed by a single application or a small number of applications of the liquid composition, accordingly, there is no interface between layers and excellent chemical resistance is obtained.

In the embodiment, an average of the distance B between the ITO particles in a state where the core-shell particles 20 and 20 are in contact with each other, that is, the distance B between particle surfaces of the adjacent ITO particles 20a and 20a is 0.5 nm to 10 nm, and accordingly, an electric field of the surface plasmons of the particles described above is easily enhanced within the distance between the particles. In a case where the distance B is less than 0.5 nm, conduction may occur between the core-shell particles and radio wave transmission properties is easily lost. In a case where the distance B is 0.5 nm or more, the infrared-shielding film 22 has radio wave transmission properties, and in a case where the distance B exceeds 10 nm, the radio wave transmission properties are maintained, but a light reflection effect is easily lost.

In addition, in the embodiment, the insulating material 20b is silica, alumina, or an organic protective material, and accordingly, each particle of the ITO particles 20a is coated to apply insulating properties to the ITO particles 20a, and the distance B can be formed between the ITO particles 20a and 20a.

In the embodiment, in a case where the epoxy resin which is the binder is an epoxy resin having a naphthalene skeleton in a molecular structure, the film hardness and abrasion resistance of the infrared-shielding film further increase.

Furthermore, according to the method for producing an infrared-shielding film of the embodiment, it is not necessary to form an overcoat layer or a base coat layer, and the infrared-shielding film 22 having desired characteristics can be easily produced by a single application or a small number of applications of the liquid composition for forming an infrared-shielding film described above.

### [Infrared-shielding film]

As shown in FIG. 1B, the infrared-shielding film 22 of the embodiment contains the aggregated particles 21 in which a plurality of single core-shell particles 20 are aggregated, and a cured binder 19 that binds the aggregated particles with each other. That is, the infrared-shielding film 22 contains the cured binder 19, and the aggregated particles 21 of the core-shell particles 20 dispersed in the cured binder 19. Since the cores of the core-shell particles 20 are ITO particles 20a having an average particle diameter of 5 nm to 25 nm and the average particle diameter of the aggregated particles 21 is 50 nm to 150 nm, in a case where visible light is incident thereto, visible light is transmitted, and in contrast, in a case where light in the near-infrared region and the infrared region is incident thereto, an electric field of surface plasmons excited by this light is enhanced by a near field effect occurring within the distance between particles, and the plasmon-resonant light in the near-infrared region and the infrared region is reflected. In addition, since the ITO particles 20a, which are conductive particles, are coated with the insulating material 20b, the infrared-shielding film 22 itself is no longer a conductive film and exhibits radio wave transmission properties. Further, since the specific cured binder 19 is contained, the film hardness and abrasion resistance increase and the chemical resistance is excellent, even without reinforcement with an overcoat layer or the like.

The average of the distance B between the ITO particles in a state where the core-shell particles 20 and 20 are in contact with each other, that is, the distance B between the particle surfaces of the adjacent ITO particles 20a and 20a may be 0.5 nm to 10 nm. In this case, the electric field of surface plasmon of the particles described above is easily enhanced within the distance between the particles. In a case where the distance B is less than 0.5 nm, conduction may occur between the core-shell particles and radio wave transmission properties is easily lost. In a case where the distance B is 0.5 nm or more, the infrared-shielding film 22 has radio wave transmission properties, and in a case where the distance B exceeds 10 nm, the radio wave transmission properties are maintained, but a light reflection effect is easily lost.

The insulating material 20b may be silica, alumina, or an organic protective material. In this case, each particle of the ITO particles 20a is coated to apply insulating properties to the ITO particles 20a, and the distance B can be formed between the ITO particles 20a and 20a.

The cured binder 19 can be, for example, a cured product of one or two or more compounds selected from the group consisting of a hydrolyzate of silica sol, an acrylic resin, an epoxy resin, a polyvinyl acetal resin, and a polyvinyl butyral resin. The cured binder 19 is obtained by curing the binder contained in the liquid composition for forming an infrared-shielding film described above by heat treatment in a case of forming the infrared-shielding film. The cured binder 19 which is a cured product of these compounds, has high film hardness and abrasion resistance, is chemically stable, and has excellent chemical resistance.

The cured binder 19 is preferably a cured product of an epoxy resin having a naphthalene skeleton in a molecular structure. In this case, the film hardness and abrasion resistance of the infrared-shielding film further increase.

As described above, the embodiments of the present invention have been described, but the present invention is not limited thereto and can be suitably changed in a range not departing from the technical idea of the present invention.

For example, in the embodiment, the infrared-shielding material in which an infrared-shielding film is formed on a substrate has been described as an example, but the configuration of the infrared-shielding material is not limited thereto.

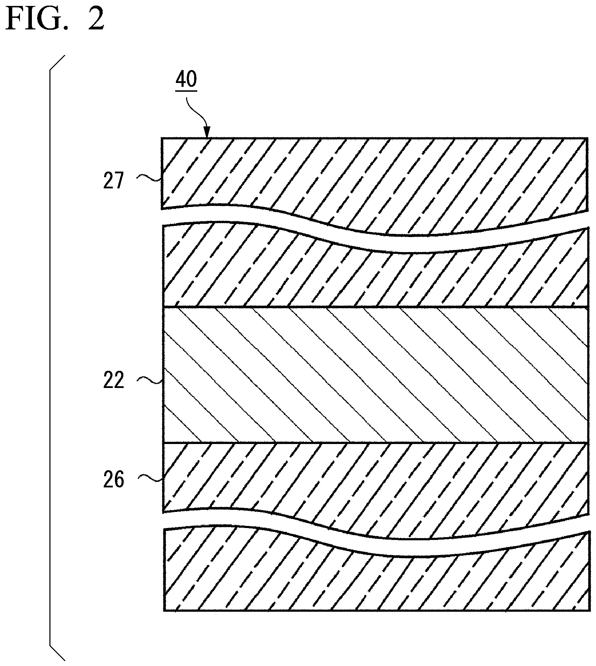

FIG. 2 is a cross-sectional view of an infrared-shielding material in which an infrared-shielding film according to one embodiment of the present invention is interposed between two substrates. As shown in FIG. 2, an infrared-shielding material 40 can also be formed by interposing the infrared-shielding film 22 between two transparent substrates 26 and 27. In this case, the infrared-shielding effect of the infrared-shielding film 22 is not deteriorated, even in a high humidity environment.

### EXAMPLES

Next, examples of the invention will be described in detail together with comparative examples.

### [7 types of binders]

Table 1 shows 7 types of binders used in liquid compositions of Examples 1 to 17 and Comparative Examples 1 to 3 and 5 to 7 of the present invention. Table 1 respectively shows binders of hydrolyzate of silica sol (No. 1), an acrylic resin (No. 2), a bisphenol A type epoxy resin (No. 3), a polyvinyl acetal resin (No. 4), a polyvinyl butyral resin (No. 5), and an epoxy resin having a naphthalene skeleton in the molecular structure (No. 6) included in the liquid composition according to the first viewpoint, and a binder of a polyimide resin (No. 7) not included in the liquid composition according to the first viewpoint.

**[Table 1]**

| | Content of binder |
|---|---|
| No.1 | Hydrolyzate of silica sol |
| No.2 | Acrylic resin |
| No.3 | Epoxy resin |
| No.4 | Polyvinyl acetal resin |
| No.5 | Polyvinyl butyral resin |
| No.6 | Epoxy resin having naphthalene skeleton |
| No.7 | Polyimide resin |

### <Example 1>

50 mL of an indium chloride (InCl₃) aqueous solution (containing 18 g of In metal) and 3.6 g of tin dichloride (SnCl₂·2H₂O) were mixed, and this mixed aqueous solution and an ammonia (NH₃) aqueous solution were simultaneously added dropwise to 500 ml of water, adjusted to pH 7, and reacted at a liquid temperature of 30°C for 30 minutes. The generated precipitate was repeatedly decanted and washed with ion exchange water (decantation washing). In a case where the resistivity of the supernatant became 50,000 Ω·cm or more, the precipitate (In/Sn coprecipitated hydroxide) was filtered to obtain a coprecipitated indium tin hydroxide having a persimmon color (yellowish brown). After the solid-liquid separated coprecipitated indium tin hydroxide was dried at 110°C overnight, and baked in the atmosphere at 550°C for 3 hours, and the obtained baked body was pulverized and loosened to obtain 30 g of golden yellow (golden) 1TO particles having an average particle diameter of 20 nm.

Next, a solvent in which water and ethanol were mixed at a mass ratio of water:ethanol of 1:3 was prepared as a dispersion medium. 30 g of the above-obtained ITO particles was added to 30 g of this mixed solvent and mixed, and a bead mill was operated on this mixed solution for 5 hours to uniformly disperse the ITO particles. Next, this dispersion was diluted with the above mixed solvent of water and ethanol until the solid content concentration of ITO became 1% by mass. While stirring 500.0 g of the diluted dispersion, 6.0 g of tetraethoxysilane (TEOS) was added to this dispersion as a silica source for forming silica to be a shell. Next, 1.5 g of an aqueous NaOH solution having a concentration of 19 M (mol/dm³) was added to the mixed solution to which tetraethoxysilane (TEOS) was added, as an alkali source (neutralizing agent) to hydrolyze and polymerize TEOS, and then, the stirring was stopped. The temperature at the time of forming the shell was 35°C, and the time required for forming the shell was 10 minutes. Further, the neutralized dispersion was washed with ultrapure water, dried by freeze drying, and then baked at 200°C for 60 minutes in a nitrogen atmosphere to obtain core-shell particles having ITO particles coated with silica. Here, the dispersion was washed by treating the dispersion in a centrifugal separator and causing the dispersion to pass a filter made of an ion exchange resin, in order to remove impurities from the dispersion.

By holding 4.5 g of the obtained core-shell particles in an environment of a relative humidity of 90% and 60°C for 30 hours, the aggregated particles in each of which the core-shell particles were aggregated were obtained. 4 g of the aggregated particles were dispersed in ethanol, and 10 g of this dispersion and 10 g of a binder which was a hydrolyzate of silica sol (No. 1) were uniformly mixed to prepare a liquid composition for forming an infrared-shielding film. Here, the hydrolyzate of silica sol (No. 1) was prepared by adding 140 g of tetraethoxysilane and 176 g of ethyl alcohol using a 500 cm³ glass four-necked flask, and adding a solution obtained by dissolving 1.5 g of 60% by mass nitric acid in 120 g of pure water at once while stirring, and then causing a reaction at 50°C for 3 hours.

This liquid composition was spin-coated on a transparent soda-lime glass substrate having a size of 50 mm × 50 mm and a thickness of 1.1 mm at a rotation rate of 3000 rpm for 60 seconds, dried at 20°C for 1 minute, and further heat-treated at 200°C for 30 minutes, and an infrared-shielding film having a thickness of 0.5 µm was formed. Thus, an infrared-shielding material in which the infrared-shielding film is formed on a glass substrate as a substrate was obtained. Table 2 shows the average particle diameter of the cores, the material of the shell, and the shell forming conditions of the liquid composition, and the high temperature and high humidity treatment conditions of the core-shell particles. Table 3 shows the average particle diameter of the aggregated particles, the distance B between particles, the content of the binder, the substrate, and the formation position of the infrared-shielding film with respect to substrate.

### <Examples 2 to 17 and Comparative Examples 1 to 7>

In Examples 2 to 17 and Comparative Examples 1 to 7, the ITO particles having an average particle diameter of cores shown in Table 2 were used. The material of the shell, the shell forming conditions, and the high temperature and high humidity treatment conditions of the core-shell particles were set as shown in Table 2. In addition, by setting the distance B between the particles, the content of the binder, the substrate, and the formation position of the infrared-shielding film with respect to substrate as shown in Table 3, the core-shell particles and the aggregated particles were prepared, and the infrared-shielding materials of Examples 2 to 17 and Comparative Examples 1 to 7 were obtained in the same manner as in Example 1.

In Examples 6, 9, and 11, the ITO dispersion prepared in Example 1 was diluted with a mixed solvent of water and ethanol used as a dispersion medium until the concentration of the solid content of ITO became 1% by mass. While stirring 500.0 g of the diluted dispersion, a diluted sulfuric acid solution was added to adjust the pH to 4. Next, an aqueous solution obtained by dissolving 15.0 g of aluminum sulfate in 80 g of ion exchange water was gradually added to the suspension, and the mixture was stirred and mixed for 60 minutes. After gradually adding a sodium hydroxide solution to adjust the pH of the suspension to 6 while continuing stirring, and the resultant material was aged at 0°C in Examples 6 and 11 and at 2°C in Example 9 for 24 hours (1440 minutes), as shown in Table 2. The obtained hydrated alumina-coated ITO particles were subjected to centrifugal washing and solid-liquid separation, followed by drying to obtain hydrated alumina-coated ITO particles. The hydrated alumina-coated ITO particles were baked at 600°C for 30 minutes in a nitrogen atmosphere to obtain core-shell particles in which the ITO particles were coated with alumina. As shown in Table 2, the obtained core-shell particles were held in an environment of a relative humidity of 85% and 85°C for 10 hours to obtain aggregated particles in each of which the core-shell particles were aggregated.

In Example 7, indium myristate and tin myristate were weighed and mixed at a ratio of indium:tin = 9:1 and dissolved in toluene. After drying the above-mentioned toluene solution under reduced pressure, it was heated at 350°C for 3 hours to obtain core-shell particles in which ITO particles were coated with an organic protective material. The obtained core-shell particles were washed with ethanol, subjected to centrifugation separation to remove the washing solution, and then dispersed in toluene to obtain aggregated particles in each of which the core-shell particles were aggregated.

In Example 12, aggregated particles in each of which core-shell particles were aggregated were obtained in the same manner as in Example 7, except that indium decanoate and tin decanoate were used instead of indium myristate and tin myristate.

In Example 17, aggregated particles in each of which core-shell particles were aggregated were obtained in the same manner as in Example 7 except that indium octylate and tin octylate were used instead of indium myristate and tin myristate.

In Examples 10 and 11, a PET film (Lumirror T-60 manufactured by Toray Industries, Inc.) was used as the substrate, the infrared-shielding film was formed on this PET film, and an infrared-shielding material was produced.

In Examples 12 to 14, as shown in FIG. 2, an infrared-shielding material was produced by interposing an infrared-shielding film between two substrates (soda-lime glass substrates).

In Comparative Examples 1 and 2, liquid compositions were respectively prepared using core-shell particles having average particle diameters of cores of 3 nm and 30 nm, infrared-shielding films were formed using these, and infrared-shielding materials were produced.

Liquid compositions were respectively prepared using a polyimide resin as the binder in Comparative Example 3 and without using a binder in Comparative Example 4, infrared-shielding films were formed therefrom, and infrared-shielding materials were produced.

In Comparative Example 5, a liquid composition was prepared without coating the ITO powder with an insulating material, an infrared-shielding film was formed therefrom, and an infrared-shielding material was produced.

In Comparative Examples 6 and 7, liquid compositions were respectively prepared using aggregated particles having average particle diameters of 30 nm and 200 nm, infrared-shielding films were formed using these, and infrared-shielding materials were produced.

In Examples 6 to 9, 11 and 14, two types of mixed binders were used as the binder of the liquid composition, as shown in Table 3. The mixing ratio of the two types of binders was 1: 1 in mass ratio.

### <Comparison Test and Evaluation>

The average particle diameter of the ITO particles (average particle diameter of the cores) and the average particle diameter of the aggregated particles in the liquid compositions for forming an infrared-shielding film obtained in Examples 1 to 17 and Comparative Examples 1 to 7 were respectively evaluated by the methods described above, and the distance B between adjacent particles of the ITO particles in the plurality of core-shell particles was measured by the following method. In addition, regarding the infrared-shielding film in the infrared-shielding material, the film thickness, the average particle diameter of the ITO particles (average particle diameter of the cores), the average particle diameter of the aggregated particles, the visible light transmittance, the maximum reflection value of the near-infrared ray (near-infrared reflectance), the film hardness, the abrasion resistance of the film, and the chemical resistance were respectively evaluated by the following methods. The results thereof are shown in Tables 3 and 4.

### (1) Distance B between adjacent particles of ITO particles in plurality of core-shell particles

The distance B between adjacent particles of the ITO particles in a plurality of core-shell particles was measured by TEM (Transmission Electron Microscope) (manufactured by JEOL Ltd., model name: JEM-201 0F). A sample for TEM observation was produced as follows. First, nitrogen gas was blown to the liquid composition to remove the solvent, and only solid content remained. The collected solid content was adhered to a polishing sample holder with an adhesive, the adhesive was cured, and the solid content was fixed using wax so as not to be separated from the polishing sample holder. Next, the solid content was thinned by mechanical polishing. Then, after thinning the solid content to a sufficient thickness by mechanical polishing, a short-hole mesh was attached to the thinned solid content, and ion milling was performed until holes were partially formed in the thinned solid content, thereby obtaining a sample for TEM observation. For the distance between particles of the ITO particles which are the cores of the core-shell particles, the shortest distance between particle surfaces which is between a certain particle and another particle closest thereto was measured. The distances between the ITO particles at 20 portions were measured regarding the samples for TEM observation of the examples and comparative examples. Table 3 shows an average value thereof. In Comparative Example 5, since no shell was present, the ITO particles were in contact with each other.

### (2) Film Thickness of infrared-shielding film

The film thickness was measured by cross-sectional observation with a scanning electron microscope (model name: SU-8000 manufactured by Hitachi High-Technologies Corporation).

### (3) Average particle diameter of core (ITO) particles in infrared-shielding film

For the average particle diameter of the core (ITO) particles in the infrared-shielding film, a test piece having a film formed on a surface of a transparent substrate was vertically erected and cured using an epoxy resin for resin filling. Then, cross-sectional polishing was performed up to an observation position of the sample to obtain a processed cross-section having no unevenness, and then the layer containing core (ITO) particles was subjected to the measurement by software (trade name: PC SEM) using a scanning electron microscope (model name: SU-8000, manufactured by Hitachi High-Technologies Corporation). The measurement regarding 100 particles was performed at a magnification of 5,000, and an average value is obtained by calculating an average thereof.

### (4) Average particle diameter of aggregated particles in infrared-shielding film

For the average particle diameter of the aggregated particles in the infrared-shielding film, a test piece is prepared in the same manner as in a case where the average particle diameter of the core (ITO) particles was measured, a part where particles are aggregated and a part where only the binder component is present are confirmed using a scanning electron microscope, a part where the aggregated particles are in a lump state is set as the aggregated particles, the measurement is performed regarding 100 particles at a magnification of 5,000, and an average value is obtained by calculating an average thereof.

### (5) Visible light transmittance and near-infrared reflectance of infrared-shielding film

Using a spectrophotometer (manufactured by Hitachi High-Technologies Corporation, model name: U-4100), maximum values of the visible light transmittance at a wavelength of 450 nm and the near-infrared reflectance in the wavelength range of 1300 nm to 2600 nm were measured based on the standard (JIS-R3216-1998). In the visible light transmittance evaluation, a case where the transmittance of the infrared-shielding film-equipped glass at a wavelength of 450 nm was 85% or greater was evaluated to be "A", a case where the transmittance was 80% or greater and less than 85% was evaluated to be "B", and a case where the transmittance was less than 80% was evaluated to be "C". In the near-infrared reflectance evaluation, a case where the maximum value of the reflectance of the infrared-shielding film-equipped glass at a wavelength of 1,300 nm to 2,600 nm was 50% or greater was evaluated to be "A", a case where the reflectance was less than 50% and 20% or greater was evaluated to be "B", and a case where the reflectance was less than 20% was evaluated to be "C".

### (6) Film hardness of infrared-shielding film

Using pencils for evaluation specified in JIS-S6006, a predetermined surface was repeatedly scratched three times with a pencil of each hardness using a 750 g weight according to the pencil hardness evaluation method specified in JIS-K5400, and the hardness at which one scratch was formed was measured. The higher the number, the higher the hardness. A case where the film hardness was 4H or more was evaluated to be "A", a case where the film hardness was H or more and less than 4H was evaluated to be "B", and a case where the film hardness was less than H was evaluated to be "C".

### (7) Abrasion resistance of infrared-shielding film

The abrasion resistance of the film was evaluated based on the presence or absence of scratches on the film surface after Steel Wool #0000 was slid on the film surface at a strength of about 100 g/cm² and reciprocated 20 times. A case where no scratches were formed was evaluated to be "A", a case where no scratches were visually observed but small scratches were confirmed when observing with a microscope at a magnification of 50 was evaluated to be "B", and a case where scratches were visually observed was evaluated to be "C".

### (8) Chemical resistance of infrared-shielding film

For the chemical resistance of the infrared-shielding film, 0.2 ml of 1% by mass hydrochloric acid was added dropwise onto the surface of the film, and the film was stored in a box at humidity of 90% for 5 hours and washed with ion exchange water. A case where there was no change in a state of the surface and a rate of change of the value of the visible light transmittance was less than 5% was evaluated to be "A", a case where a change in the state of the surface was not visually observed but the visible light transmittance was changed in a range of 5% or more to less than 10% was evaluated to be "B", and a case where a change in the state of the surface was visually observed but the visible light transmittance was changed 10% or more was evaluated to be "C".

**[Table 2]**

| | Core-shell particles | | | | High temperature and high humidity treatment conditions of core-shell particles | | |
|---|---|---|---|---|---|---|---|
| | Average particle diameter of cores (nm) | Material of shell | Shell forming conditions | | | | |
| | | | Temperature (°C) | Time (min) | Temperature (°C) | Relative humidity (%) | Time (hour) |
| Example 1 | 20 | Silica | 35 | 10 | 60 | 90 | 30 |
| Example 2 | 20 | Silica | 25 | 10 | 60 | 90 | 20 |
| Example 3 | 10 | Silica | 40 | 10 | 60 | 90 | 5 |
| Example 4 | 10 | Silica | 40 | 15 | 85 | 85 | 5 |
| Example 5 | 20 | Silica | 35 | 15 | 85 | 85 | 5 |
| Example 6 | 10 | Alumina | 0 | 1440 | 85 | 85 | 10 |
| Example 7 | 15 | Organic protective material | - | - | - | - | - |
| Example 8 | 5 | Silica | 40 | 20 | 60 | 90 | 30 |
| Example 9 | 10 | Alumina | 2 | 1440 | 85 | 85 | 10 |
| Example 10 | 8 | Silica | 15 | 10 | 85 | 85 | 10 |
| Example 11 | 20 | Alumina | 0 | 1440 | 85 | 85 | 10 |
| Example 12 | 10 | Organic protective material | - | - | - | - | - |
| Example 13 | 25 | Silica | 40 | 10 | 85 | 85 | 5 |
| Example 14 | 10 | Silica | 35 | 10 | 85 | 85 | 20 |
| Example 15 | 10 | Silica | 20 | 10 | 85 | 85 | 10 |
| Example 16 | 10 | Silica | 40 | 30 | 85 | 85 | 5 |
| Example 17 | 10 | Organic protective material | - | - | - | - | - |
| Comparative Example 1 | 3 | Silica | 35 | 10 | 60 | 90 | 20 |
| Comparative Example 2 | 30 | Silica | 25 | 5 | 60 | 90 | 20 |
| Comparative Example 3 | 10 | Silica | 40 | 10 | 85 | 85 | 5 |
| Comparative Example 4 | 10 | Silica | 40 | 10 | 85 | 85 | 5 |
| Comparative Example 5 | 10 | - | - | - | - | - | - |
| Comparative Example 6 | 10 | Silica | 40 | 10 | 40 | 90 | 10 |
| Comparative Example 7 | 10 | Silica | 40 | 10 | 85 | 85 | 50 |

**[Table 3]**

| | Aggregated particles | | Content of binder | Formation position of infrared shielding film with respect to substrate |
|---|---|---|---|---|
| | Average particle diameter of aggregated particles (nm) | Distance B between particles (nm) | | |
| Example 1 | 70 | 2 | No.1 | On glass substrate |
| Example 2 | 60 | 1 | No.2 | On glass substrate |
| Example 3 | 50 | 2 | No.3 | On glass substrate |
| Example 4 | 90 | 4 | No.4 | On glass substrate |
| Example 5 | 100 | 4 | No.5 | On glass substrate |
| Example 6 | 60 | 6 | No.3+No.1 | On glass substrate |
| Example 7 | 75 | 5 | No.6+No.1 | On glass substrate |
| Example 8 | 70 | 4 | No.2+No. 1 | On glass substrate |
| Example 9 | 80 | 10 | No.3+No.1 | On glass substrate |
| Example 10 | 120 | 0.5 | No.4 | On PET film |
| Example 11 | 140 | 5 | No.6+No. 1 | On PET film |
| Example 12 | 130 | 1 | No.5 | Between glass substrates |
| Example 13 | 100 | 2 | No.2 | Between glass substrates |
| Example 14 | 150 | 3 | No.3+No. 1 | Between glass substrates |
| Example 15 | 110 | 0.1 | No.3 | On glass substrate |
| Example 16 | 80 | 20 | No.3 | On glass substrate |
| Example 17 | 70 | 1 | No.6 | On glass substrate |
| Comparative Example 1 | 60 | 2 | No.2 | On glass substrate |
| Comparative Example 2 | 60 | 2 | No.2 | On glass substrate |
| Comparative Example 3 | 60 | 2 | No.7 | On glass substrate |
| Comparative Example 4 | 60 | 2 | - | On glass substrate |
| Comparative Example 5 | 60 | 0 | No.1 | On glass substrate |
| Comparative Example 6 | 30 | 2 | No.2 | On glass substrate |
| Comparative Example 7 | 200 | 2 | No.2 | On glass substrate |

**[Table 4]**

| | Infrared shielding film | | | | | | | | | |
|---|---|---|---|---|---|---|---|---|---|---|
| | Film thickness (µm) | Average particle diameter of core (ITO) particles (nm) | Average particle diameter of aggregated particles (nm) | Transmittance (%) | Maximum reflectance (%) | Evaluation | | | | |
| | | | | Visible light (450 nm) | Near infrared light (1300 nm to 2600 nm) | Visible light transmittance | Near infrared light reflectance | Film hardness | Abrasion resistance | Chemical resistance |
| Example 1 | 1.5 | 20 | 70 | 83 | 40 | A | B | A | A | A |
| Example 2 | 1.2 | 20 | 60 | 88 | 61 | A | A | A | A | A |
| Example 3 | 2.0 | 10 | 50 | 81 | 38 | A | B | A | A | A |
| Example 4 | 2.5 | 10 | 90 | 80 | 46 | A | B | B | A | B |
| Example 5 | 3.0 | 20 | 100 | 86 | 51 | B | A | B | A | B |
| Example 6 | 1.8 | 10 | 60 | 88 | 59 | A | A | A | A | A |
| Example 7 | 1.3 | 15 | 75 | 90 | 55 | A | A | A | A | A |
| Example 8 | 2.0 | 5 | 70 | 85 | 43 | A | B | A | A | A |
| Example 9 | 0.8 | 10 | 80 | 86 | 35 | A | B | A | A | A |
| Example 10 | 3.0 | 8 | 120 | 81 | 47 | B | B | B | A | B |
| Example 11 | 0.8 | 20 | 140 | 87 | 35 | A | B | B | A | A |
| Example 12 | 1.6 | 10 | 130 | 90 | 53 | A | A | A | A | A |
| Example 13 | 2.3 | 25 | 100 | 86 | 63 | A | A | A | A | A |
| Example 14 | 1.5 | 10 | 150 | 88 | 65 | A | A | A | A | A |
| Example 15 | 1.2 | 10 | 110 | 91 | 24 | A | B | A | A | A |
| Example 16 | 1.2 | 10 | 80 | 85 | 30 | A | B | A | A | A |
| Example 17 | 1.5 | 10 | 70 | 88 | 55 | A | A | A | A | B |
| Comparative Example 1 | 1.2 | 3 | 60 | 85 | 15 | A | C | A | A | A |
| Comparative Example 2 | 1.2 | 30 | 60 | 75 | 23 | C | B | A | A | A |
| Comparative Example 3 | 1.2 | 10 | 60 | 70 | 25 | C | B | A | B | C |
| Comparative Example 4 | 0.8 | 10 | 60 | 84 | 37 | B | B | C | C | C |
| Comparative Example 5 | 1.2 | 10 | 60 | 86 | 11 | A | C | A | B | A |
| Comparative Example 6 | 1.2 | 10 | 30 | 88 | 13 | A | C | A | B | B |
| Comparative Example 7 | 1.2 | 10 | 200 | 74 | 9 | C | C | A | C | C |

As clearly shown from Tables 2 to 4, in Comparative Example 1, since the average particle diameter of the cores of the core-shell particles was too small as 3 nm, a sufficient infrared reflection effect was not obtained, the maximum reflection value of the infrared-shielding film was small as 15%, and the near-infrared reflectance was "C". In contrast, in Comparative Example 2, since the average particle diameter of the cores of the core-shell particles was too large as 30 nm, the visible light transmittance of the infrared-shielding film was small as 75%, and the visible light transmittance was "C".

In Comparative Example 3, since the polyimide resin was used as the binder, the visible light transmittance of the infrared-shielding film was small as 70%, and the visible light transmittance was "C". The chemical resistance was "C". In Comparative Example 4, since no binder was used, the film hardness of the infrared-shielding film was "C", and both the abrasion resistance and the chemical resistance were "C".

In Comparative Example 5, since the liquid composition was prepared without coating the ITO powder with the insulating material, a sufficient infrared reflection effect was not obtained, the maximum reflection value of the infrared-shielding film was small as 11%, and the near-infrared reflectance was "C".

In Comparative Example 6, since the average particle diameter of the aggregated particles was too small as 30 nm, a sufficient infrared reflection effect was not obtained, the maximum reflection value of the infrared-shielding film was small as 13%, and the near-infrared reflectance was "C". In contrast, in Comparative Example 7, since the average particle diameter of the aggregated particles was too large as 200 nm, the visible light transmittance of the infrared-shielding film was small as 74%, the maximum reflection value of the infrared-shielding film was small as 9%, and both the visible light transmittance and the near-infrared reflectance were "C". The film hardness of the infrared-shielding film was "A", but both the abrasion resistance and the chemical resistance were "C".

On the other hand, in Examples 1 to 17, the average particle diameter of the cores and the average particle diameter of the aggregated particles of the core-shell particles were respectively within predetermined ranges and the binder was a predetermined resin. Accordingly, the visible light transmittance of infrared-shielding film was high as 80% to 91%, the maximum reflection value was high as 24% to 65%, and both the visible light transmittance and near-infrared reflectance were "A" or "B". In addition, the film hardness of the infrared-shielding film was "A" or "B", the abrasion resistance was "A", and the chemical resistance was "A" or "B".

### Industrial Applicability

The infrared-shielding film formed of the liquid composition of the present invention and the infrared-shielding material therefrom can be applied to products such as window glass, a sunroof, a sun visor, a PET (polyethylene terephthalate) bottle, a packaging film, and glasses, and the infrared-shielding effect can be applied to the products.

### Reference Signs List

- 10, 20: Core-shell particles
- 10a, 20a: ITO particles
- 10b, 20b: Insulating material
- 12: ITO particle-containing layer
- 13: Overcoat layer
- 14: Base coat layer
- 15: Infrared-shielding laminate
- 19: cured binder
- 21: Aggregated particles
- 22: Infrared-shielding film
- 16, 26, 27: Substrate
- 30, 40: Infrared-shielding material

## Claims

1. A liquid composition for forming an infrared-shielding film, the liquid composition comprising:
aggregated particles in each of which a plurality of single core-shell particles are aggregated;
a binder; and
a solvent,
wherein cores of the core-shell particles are ITO particles having an average particle diameter of 5 nm to 25 nm,
each shell of the core-shell particles is an insulating material,
an average particle diameter of the aggregated particles is 50 nm to 150 nm, and
the binder is one or two or more compounds selected from the group consisting of a hydrolyzate of silica sol, an acrylic resin, an epoxy resin, a polyvinyl acetal resin, and a polyvinyl butyral resin.

2. The liquid composition for forming an infrared-shielding film according to claim 1,
wherein a distance between adjacent particles of the plurality of core-shell particles constituting the aggregated particles is 0.5 nm to 10 nm.

3. The liquid composition for forming an infrared-shielding film according to claim 1 or 2,
wherein the insulating material is silica, alumina, or an organic protective material.

4. The liquid composition for forming an infrared-shielding film according to any one of claims 1 to 3,
wherein the epoxy resin is an epoxy resin having a naphthalene skeleton in a molecular structure.

5. A method for producing an infrared-shielding film comprising:
applying the liquid composition for forming an infrared-shielding film according to any one of claims 1 to 4 on a transparent substrate, drying the liquid composition, and performing a heat treatment to form the infrared-shielding film.

6. An infrared-shielding film comprising:
aggregated particles in each of which a plurality of single core-shell particles are aggregated; and
a cured binder,
wherein cores of the core-shell particles are ITO particles having an average particle diameter of 5 nm to 25 nm,
each shell of the core-shell particles is an insulating material,
an average particle diameter of the aggregated particles is 50 nm to 150 nm, and
the cured binder is a cured product of one or two or more compounds selected from the group consisting of a hydrolyzate of silica sol, an acrylic resin, an epoxy resin, a polyvinyl acetal resin, and a polyvinyl butyral resin.
